Europäisches Patentamt

European Patent Office

Office européen des brevets

(11) Publication number: **0 320 768 B1**

# EUROPEAN PATENT SPECIFICATION

(45) Date of publication of patent specification: **15.04.92**

(51) Int. Cl.5: **C09K 11/88**, G21K 4/00

(21) Application number: **88120422.6**

(22) Date of filing: **07.12.88**

(54) **Method for recording and reproducing a radiation image, apparatus using such a method, radiation image storage panel and photostimulable phosphors.**

(30) Priority: **16.12.87 IT 2302587**

(43) Date of publication of application:
**21.06.89 Bulletin 89/25**

(45) Publication of the grant of the patent:
**15.04.92 Bulletin 92/16**

(84) Designated Contracting States:
**DE FR GB**

(56) References cited:
**WO-A-88/03161**

(73) Proprietor: **MINNESOTA MINING AND MANU-FACTURING COMPANY
3M Center, P.O. Box 33427
St. Paul, Minnesota 55133-3427(US)**

(72) Inventor: **Morlotti, Romano
3M Italia Ricerche S.p.A.
I-17016 Ferrania Savona(IT)**

(74) Representative: **Checcacci, Giorgio
PORTA, CHECCACCI & BOTTI, Studio as-sociato, Corso di Porta Romana, 123
I-20122 Milano(IT)**

EP 0 320 768 B1

## Description

### FIELD OF THE INVENTION

This invention relates to a method for recording and reproducing a radiation image by causing a visible or infrared radiation-stimulable phosphor to absorb a high energy radiation passing through an object, stimulating said phosphor to release the energy stored as fluorescent light and detecting said fluorescent light, the photostimulable phosphor being selected from the group of sulphur, selenium or tellurium substituted barium fluorohalides, activated with divalent europium.

### BACKGROUND OF THE INVENTION

US patent 3,859,527 discloses a method for recording and reproducing a high energy radiation image using a radiation image storage panel comprising a stimulable phosphor which emits light when stimulated with visible or infrared light after exposure to that radiation (high energy radiation meaning an electromagnetic wave or a corpuscular radiation such as X-ray, $\alpha$-rays, $\beta$-rays, gamma rays, neutron rays, ultraviolet rays, or the like).

US patent 4,258,264 discloses a method and an apparatus for reproducing a radiation image by stimulating a storage phosphor with stimulating rays, whose wavelengths are in the range of 600 to 700 nm, and detecting the stimulated light by means of a photodetector, the detected light being in the range of 300 to 500 nm.

US patent 4,239,968 discloses a method and an apparatus for recording and reproducing a radiation image by utilizing the photostimulability of a phosphor selected within the group of $(Ba_{1-x}M_x)FX : yA$ phosphors, wherein M is at least one divalent metal selected from the group consisting of Mg, Ca, Sr, Zn, Cd; X is at least one of the halogens Cl, Br and I; A is at least one element selected from the group consisting of Eu, Tb, Ce, Tm, Dy, Pr, Ho, Nd, Yb and Er, $0 \leq x \leq 0.6$ and $0 \leq y \leq 0.2$, and the wavelength of the stimulating light is not less than 500 nm, preferably within the range of 500 to 700 nm.

Other patents disclose a method for reproducing a radiation image by using particular classes of barium fluorohalide phosphors. For example US patent 3,951,848 discloses BaFCl:Eu phosphors containing a brightness-improving additive selected among thallium, lead and aluminium; US patent 4,336,154 discloses a photostimulable boron-containing phosphor having the formula

$$(Ba_{1-x}M_x)F_2 . aBaX_2 : yEu, zB$$

wherein M and X are the same as in the aforesaid US patent 4,239,968, except than M can also be Be, and a,x,y, and z respectively satisfy the conditions $0.5 \leq a \leq 1.25$, $0 \leq x \leq 1$, $10^{-6} \leq y \leq 0.2$, and $0 \leq z \leq 0.2$.

US patent 4,608,190 discloses a photostimulable potassium-containing anion deficient BaFCl:Eu/BaFBr:Eu phosphor.

EP patent application S.N. 83,085 discloses the preparation of radiation image storage panels containing a divalent europium activated complex halide represented by formula $BaFX.xNaX' : aEu^{2+}$, wherein X and X' each designate at least one of Cl, Br and I, $0 \leq x \leq 0.1$ and $0 \leq a \leq 0.2$

All these phosphors exhibit a stimulable emission in the wavelength region of the visible spectrum shorter than 500 nm and must be stimulated with light of a wavelength higher than 500 nm (such as a He-Ne laser beam of 633 nm), where they exhibit the maximum stimulability.

On the other hand, the same phosphors do not exhibit a sufficient stimulable emission when they are stimulated with light of a wavelength longer than 700 nm.

### SUMMARY OF THE INVENTION

New phosphors for use in panels, apparatus and methods for recording and reproducing a high energy radiation image, including the steps of stimulating a phosphor imagewise exposed to radiation and detecting the fluorescent light emitted by said phosphor upon stimulation, have been found characterized by being divalent europium activated sulphur, selenium or tellurium substituted barium fluorohalides.

### DETAILED DESCRIPTION OF THE INVENTION

The present invention relates to a method for recording and reproducing a radiation image comprising the steps of (i) causing a visible or infrared radiation-stimulable phosphor to absorb high energy radiation passing through an object, (ii) stimulating said phosphor with visible or infrared radiation to release the energy stored as fluorescent light and (iii) detecting said fluorescent light with light detecting means, said method being characterized in that said phosphor is selected from the group of sulphur, selenium or tellurium substituted barium fluorohalides, activated with divalent europium.

Preferably, the present invention relates to a method as described above wherein said phosphor is represented by the formula:

(1) $(1-m)BaFX.m(M_xA) : aEu^{2^+}$,

wherein X = Cl or Br; M is an element selected from the group of Li,Na,K,Rb,Ba,Sr,Ca and Mg; A is S,Se or Te; $0<m\leqq0.03$; x = 0, 1 or 2 and $0<a\leqq0.01$.

In particular, the present invention relates to the method described above wherein the wavelength of said stimulating radiation is in the range of 480 to 1100 nm.

More in particular, the present invention relates to the method described above wherein the wavelength of said stimulating radiation is in the range of 700 to 1100 nm.

In another aspect, the present invention relates to an apparatus for recording and reproducing a radiation image comprising (i) means for causing a visible or infrared radiation-stimulable phosphor to absorb high energy radiation passing through an object, (ii) means for stimulating said phosphor with visible or infrared stimulating radiation to release the energy stored as fluorescent light and (iii) means for detecting said fluorescent light, said apparatus being characterized in that said phosphor is selected from the group of sulphur, selenium or tellurium substituted barium fluorohalides, activated with divalent europium.

In a further aspect, the present invention relates to a high energy radiation image storage panel having a fluorescent layer comprising a binder and a stimulable phosphor dispersed in said binder, wherein said stimulable phosphor is selected from the group of sulphur, selenium or tellurium substituted barium fluorohalides, activated with divalent europium.

In a still further aspect, the present invention relates to a photostimulable phosphor selected from the group of sulphur, selenium or tellurium substituted barium fluorohalides, activated with divalent europium.

The method and the apparatus for recording and reproducing a high energy radiation image using the radiation image storage panel of the present invention schematically comprise: a high energy radiation source, an object, a radiation image storage panel, a light source emitting stimulating radiations which stimulate the fluorescent layer of the panel to release the radiation energy stored therein as fluorescent light, a filter for cutting off the radiation emitted by the light source and reflected by the panel at a selected wavelength and for transmitting only the fluorescent light emitted by the panel, and a focusing optic for collecting the light emitted by the panel and passed through the filter. The combination of a photosensor with a photomultiplier is used to detect and convert the light emitted by the panel into electrical signals, the electrical signal being amplified by means of an amplifier and said amplified electrical signal being analysed by a data analyser.

Means for causing a visible or infrared radiation-stimulable phosphor to absorb high energy radiation passing through an object are known in the art, as described in US patent 4,239,968. They include a high energy radiation source (such as e.g. an X-ray tube) and a radiation image storage panel similar to that of the present invention including a phosphor different from those of the present invention. When the phosphor is exposed to X-rays, the radiation passes through the object. The intensity of the radiation which has passed through the object represents the transmittance factor of the object. Furthermore, an image which represents the transmittance pattern of the object is obtained by means of the radiation impinging upon the panel. The radiation is absorbed by the fluorescent layer of the panel and electrons or holes are generated in the fluorescent layer in proportion to the amount of the absorbed radiation. The electrons or holes are stored in the present invention in the traps of the sulphur, selenium or tellurium substituted barium fluorohalide phosphors activated with divalent europium of the present invention. The radiation image stored in the panel is converted to visible radiation upon stimulation with a stimulating radiation beam. Means for stimulating said panel with visible or infrared radiations are known in the art to include stimulating radiation sources emitting in the infrared or visible field, such as for example, respectively, a 0.06 mW QJ Lamp emitting at 800 nm or a He-Ne laser emitting a laser beam at 633 nm, as described in US patent 4,239,968. A scanner apparatus allows the fluorescent layer of the panel to be scanned with stimulating radiations emitted by a light source, as described in US patent 4,258,264. Focusing means allow said stimulating light to be focused on the panel in a small spot (such as $0.7$ $mm^2$), as described in US patent 4,258,264. The electrons or holes stored in the traps of the photostimulable phosphors are expelled therefrom, and the radiation image stored in the panel is released as fluorescent light.

3

The luminescence of the fluorescent light emitted by the panel is proportional to the number of the electrons or holes stored in the fluorescent layer of the panel, that is to the amount of the radiation absorbed therein.

Means for detecting said fluorescent light emitted by the panel are known in the art to include: (a) interference filter means, whose transmission peak is tuned to the wavelength of the signal emitted by the sample to filter-out the unwanted stimulating light (such as e.g. a BG1 or BG3 Schott filter); (b) optical means to collect the light emitted by the panel such as for example light guide members having a linear or arcuate end portion to be located adjacent to a scan line of the photostimulable phosphor to receive and guide the light emitted by the phosphor and an anular end portion to be located adjacent to the light receiveing face of the photodetector, such as described in US patent 4,346,295. Useful optical means to collect the light emitted by the panel are also represented by elliptical mirrors having the concave side turned towards the panel and on opening for the passage of said stimulating radiation, as described in European Patent Application S.N. 210,505; (c) the combination of a photosensor with a photomultiplier to detect and convert the fluorescent light into electrical signals (such as e.g. a Thorn Emi 9558 QB photomultiplier); (d) a picoammeter for the amplification of the signal (such as e.g. an EG&G Parc Model 181 amplifier) and (e) evaluation means to evaluate the obtained electrical signal (corresponding to the original high energy radiation image), such as e.g. a data analyser.

The radiation image storage panel of the above described apparatus has a fluorescent layer comprising, as a stimulable phosphor, at least one phosphor selected from the group of sulphur, selenium or tellurium substituted barium fluorohalides activated with divalent europium.

$BaFX$ (X = Cl or Br) is a typical host for $Eu^{2+}$, which gives a bell-shaped blue-UV emission band with a maximum depending upon the nature of X.

The storage capability of the $BaFX$ phosphors is believed to be due to the hole trapping at $Eu^{2+}$ sites and to electron trapping at $F^+$ centers with respective formation of $Eu^{3+}$ and F centers. Photostimulation with visible or infrared light is believed to release electrons from F-centers ($F \cdots\rightarrow F^+ + e^-$) promoting their recombination with holes at $Eu^{3+}$ with consequent emission of light ($Eu^{3+} + e^- \longrightarrow Eu^{2+} + h$ ).

In agreement with this model, the efficiency of storage capability is enhanced by increasing the concentration of $F^+$ centers (and of course of $Eu^{2+}$ ions, in a certain range).

According to the present invention, it has been found that controlled addition of elemental sulphur, selenium or tellurium or of sulphur, selenium or tellurium containing compounds, such as $Na_2S$, $Na_2SO_4$, $Na_2Se$, $Na_2SeO_3$, $K_2S$, $Rb_2S$, $BaS$, $BaSO_4$, $SrS$, $Cs_2S$ and $(NH_4)_2S$, promote the formation of centers of the F-like family, i.e. anionic vacancies, whose interaction with sulphur ions deepen the corresponding energy levels.

In particular, the radiation image storage panel of the apparatus above has a fluorescent layer comprising, as a stimulable phosphor, at least one phosphor represented by the formula:

(1)     $(1-m)BaFX.m(M_xA) : aEu^{2+}$,

wherein X = Cl or Br; M is an element selected from the group of Li,Na,K,Rb,Ba,Sr,Ca and Mg; A is S, Se or Te; $0 < m \leq 0.03$; x = 0, 1 or 2 and $0 < a \leq 0.01$. In the previous formula, when M is represented by a monovalent element, such as Li,Na,K or Rb, the value of x is 2. On the other hand, when M is represented by a divalent group, such as Ba, Sr or Ca, the value of x is 1. If x is 0, Me group is absent.

Furthermore, it has been found that the luminescence of the fluorescent light emitted by the stimulable phosphor selected from the group of sulphur, selenium or tellurium substituted barium fluorohalides activated with divalent europium of the present invention tends to be higher than that of any other known storage europium activated barium fluorohalide phosphor with no sulphur, selenium or tellurium addition, when stimulated in the range from 480 to 1100 nm.

It has been found that the luminescence of the fluorescent light emitted by the stimulable phosphor selected from the group of sulphur, selenium or tellurium substituted barium fluorohalides activated with divalent europium of the present invention is much higher than that of any other known storage europium activated barium fluorohalide phosphor with no sulphur, selenium or tellurium addition, when stimulated in the infrared field with a wavelength from 700 to 1100 nm. In fact, while the photostimulable europium activated barium fluorohalide phosphors known in the art do not exhibit a significant emission when stimulated by an infared stimulating radiation, the light emitted by the sulphur, selenium or tellurium substituted barium fluorohalide stimulable phosphor activated with divalent europium of the present invention exhibits a significant fluorescence even when the phosphor is stimulated with radiations in the infrared region of the electromagnetic spectrum.

According to the present invention, the above mentioned sulphur, selenium or tellurium substituted barium fluorohalide phosphors activated with divalent europium are thermally processed in the presence of alkali metal salts.

Preferably, they are processed in the presence of alkali metal sulfides, more preferably sodium or potassium sulfides to induce the presence of $F^+$ centers which are thought to cause the particular characteristics of the phosphor of the present invention.

Such thermal processing includes heating which can be performed in the presence of a salt acting as a "flux" (such as ammonium sulfate), at a temperature in the range of 600 to 1000°C, preferably 700 to 900°C, and cooling at room temperature before the obtained phosphors are repeatedly washed with water to be purified. In order to obtain a better efficiency of the photostimulated emission, the shortest possible time required to cool the phosphor from the above mentioned high temperature to the room temperature has been found to be preferred; it is preferred for instance to cool the phosphor in the air, by taking it out of the oven after having extinguished it, instead of leaving the phosphor to cool inside the oven or it is more preferred to cool the phosphor in liquid nitrogen and then allow it to warm to room temperature. The photostimulated efficiency of the obtained phosphors can be thus increased by 20 to 300%.

Heating can be performed with a mechanical mixture of the reagents in a crucible in the air or inert gas atmosphere, e.g. argon, for a time ranging from 1 to 10, preferably from 1 to 5 hours.

The radiation image storage panels of the present invention normally comprise a fluorescent layer including a binder and, dispersed therein, at least one phosphor selected from the group of the above mentioned sulphur, selenium or tellurium substituted barium fluorohalides activated by divalent europium of the present invention. The fluorescent layer is formed by dispersing the phosphor in the binder to prepare a coating dispersion, and then applying the coating dispersion according to conventional coating methods to form a uniform layer. Although the fluorescent layer itself can be a radiation image storage panel when the fluorescent layer is self-supporting, the fluorescent layer is generally provided on a substrate to form a radiation image storage panel. Further, a protective layer is usually provided on the surface of the fluorescent layer for physically and chemically protecting the fluorescent layer. Furthermore, a primer layer is sometimes provided between the fluorescent layer and the substrate for closely binding the fluorescent layer to the substrate.

As the binder employed in the fluorescent layer of the radiation image storage panel of the present invention, there can be used for example those binders commonly used for forming layers, such as gum arabic, proteins such as gelatin, polysaccharides such as dextrane, organic polymer binders such as polyvinylbutyral, polyvinylacetate, nitrocellulose, ethylcellulose, vinylidenechloride-vinylchloride copolymers, polymethylmethacrylate, polybutylmethacrylate, vinylchloride-vinylacetate copolymers, polyurethane, cellulose acetate-butyrate, polyvinyl alcohol, and the like.

Generally, the binder is used in an amount of 0.01 to 1 part by weight per one part by weight of the phosphor. However, from the viewpoint of sensitivity and sharpness of the panel obtained, the amount of the binder should preferably be small. Accordingly, in consideration of both the sensitivity and sharpness of the panel and the easiness of application of the coating dispersion, the binder is preferably used in an amount of 0.03 to 0.2 parts by weight per one part by weight of the stimulable phosphor. The thickness of the fluorescent layer is generally within the range of 10 $\mu$m to 1 mm.

In the radiation image storage panel of the present invention, the fluorescent layer is generally coated on a substrate. As the substrate, various materials such as polymer material, glass, wool, cotton, paper, metal, or the like can be used. From the viewpoint of handling the panel as an information recording medium, the substrate should preferably be processed into a sheet or flexible roll. In this connection, as the substrate is preferable an organic polymeric film such as a cellulose acetate film, polyester film, polyethylene-terephthalate film, polyamide film, triacetate film, polycarbonate film, or the like, or ordinary paper, or processed paper such as a photographic paper, baryta paper, resin-coated paper, paper which contains a pigment such as titanium dioxide, or the like. The substrate may have a primer layer on one surface thereof (the surface on which the fluorescent layer is provided) for the purpose of holding the fluorescent layer tightly. As the material of the primer layer, an ordinary adhesive can be used. In providing a fluorescent layer on the substrate or on the primer layer, a coating dispersion comprising the phosphor dispersed in a binder may be directly applied to the substrate or to the primer layer to form the fluorescent layer. Alternatively, a fluorescent layer formed beforehand may be bound to the substrate or to the primer. Where the substrate used is permeable to the stimulating radiations of the phosphor, the radiation image storage panel can be exposed to the stimulating radiation from the substrate side.

Further, in the radiation image storage panel of the present invention, a protective layer for physically and chemically protecting the fluorescent layer is generally provided on the surface of the fluorescent layer intended for exposure (on the side opposite the substrate). When, as mentioned above, the fluorescent layer is self-supporting, the protective layer may be provided on both surfaces of the fluorescent layer. The

EP 0 320 768 B1

protective layer may be provided on the fluorescent layer by directly applying thereto a coating dispersion to form the protective layer thereon, or may be provided thereon by bonding thereto the protective layer formed beforehand. As the material of the protective layer, a conventional material for a protective layer such as nitrocellulose, ethylcellulose, cellulose acetate, polyester, polyethyleneterephthalate, and the like can be used. The radiation image storage panel of the present invention may be colored with a colorant. Further, the fluorescent layer on the radiation image storage panel of the present invention may contain a white powder dispersed therein. By using a colorant or a white powder, a radiation image storage panel which provides a very sharp image can be obtained.

The present invention will be described with more details referring to the following examples.

## EXAMPLE 1

Preparation of the phosphor shown as compound 6 in the following table 1

$0.9475 BaFCl.0.0524 Na_2S:0.0001 Eu^{2+}$

Approximations in expressions of the numerical values which indicate the molar fractions are the cause of approximation in the numerical value expressing the sum thereof (in this case 0.9999,- in other cases 0.9998 -, rather than 1.0000).

A mixture consisting of 10 g of $BaF_2$, 11.877 g of $BaCl_2$, 0.0037 g of $EuCl_3$ and 0.492 g of $Na_2S$ was put in a silica reaction vessel and then heated at a temperature of 850°C for 2 hours in air. The obtained phosphor was then left to cool in the air to room temperature, pulverised and sieved in cold water.

## EXAMPLE 2

Several sulphur, selenium or tellurium substituted barium fluorochloride phosphors activated with divalent europium were prepared in the same way described in Example 1 (see Compounds 2-5 and 7-18 of Table 1) by using the appropriate sulphur, selenium, or tellurium compound.

## EXAMPLE 3

Preparation of the phosphor shown as compound 22 in the following table 2

$0.9361 BaFBr.0.0638 Na_2S:0.0001 Eu^{2+}$

A mixture consisting in 10 g of $BaF_2$, 16.94 g of $BaBr_2$, 0.0025 g of $Eu_2O_3$ and 0.492 g of $Na_2S$ was prepared as described in Example 1.

Compounds 20, 21 and 23 of Table 2 were prepared in the same way.

## EXAMPLE 4

Samples of phosphors of Examples 1 to 3 were exposed to 40 KVp and 10 mA X-ray radiation for 5 seconds. After 2 minutes they were then stimulated with a 633 nm light beam, which was obtained by causing the light to be emitted by a 0.7 mV He-Ne laser and passed through a grating monochromator. Photostimulated light emitted by the phosphor was collected by a green-sensitive photomultiplier (Thorn-Emi 9635 QB type) and converted into electrical signals, while the unwanted stimulating light reflected by the phosphor was filtered out by a collecting filter (Schott BG-3 type) having a transmission peak of 360 nm.

The electrical signal was amplified by the combination of an EG&G Parc Model 181 pre-amplifier and an EG&G Parc Model 113 amplifier. The signal was then evaluated by a Data Precision 6000, Division Analogic Corp., data analyser.

## EXAMPLE 5

Samples of phosphors obtained with the preparations described in Examples 1 to 3 were exposed to X-ray radiations as described in Example 4, with the only difference that the phosphors were stimulated with a 800 nm light beam obtained by causing such light to be emitted by a 0.06 mW QJ Lamp.

The following Table 1 reports the photostimulated emitted light emission values of the phosphors prepared according to the Examples 1 and 2 and processed as described in Examples 4 and 5. In comparison a sample of BaFCl:0.0001Eu$^{2+}$ phosphor described in the art was evaluated under the same conditions. (1-m) amd m, respectively, indicate the molar fraction of BaFCl and of the addition to the BaFCl matrix as in the previous formula (1).

Table 1

| Effect of sulphur, selenium or tellurium addition to BaFCl:aEu$^{2+}$ phosphor (a = 0.0001). | | | | | |
|---|---|---|---|---|---|
| Cmp. | Additions | (1-m) | m | Emission efficiency | |
| | | | | 633 nm | 800 nm |
| 1. | None | 1 | 0 | 1.0 | 1.0 |
| 2. | BaSO$_4$ | 0.9982 | 0.0016 | 1.0 | 1.0 |
| 3. | BaSO$_4$ | 0.9834 | 0.0165 | 1.8 | 1.5 |
| 4. | Na$_2$S | 0.9979 | 0.0019 | 1.5 | 1.7 |
| 5. | Na$_2$S | 0.9949 | 0.0050 | 2.2 | 2.3 |
| 6. | Na$_2$S | 0.9475 | 0.0524 | 2.6 | 4.1 |
| 7. | Na$_2$S | 0.8952 | 0.1048 | 2.0 | 3.5 |
| 8. | Na$_2$S | 0.7903 | 0.2096 | 1.6 | 4.1 |
| 9. | Na$_2$Se | 0.9953 | 0.0045 | 2.5 | 2.5 |
| 10. | Na$_2$Se | 0.9549 | 0.0450 | 2.2 | 3.8 |
| 11. | Na$_2$SeO$_3$ | 0.9986 | 0.0013 | 2.2 | 2.5 |
| 12. | Na$_2$SeO$_3$ | 0.9869 | 0.0130 | 2.6 | 4.1 |
| 13. | K$_2$S | 0.9837 | 0.0162 | 2.2 | 1.7 |
| 14. | K$_2$S | 0.9470 | 0.0528 | 2.0 | 1.6 |
| 15. | Rb$_2$S | 0.9933 | 0.0065 | 1.3 | 1.3 |
| 16. | S | 0.9011 | 0.0988 | 2.0 | 2.7 |
| 17. | Se | 0.9945 | 0.0053 | 1.7 | 2.5 |
| 18. | Te | 0.9871 | 0.0128 | 1.5 | 2.2 |

In Table 1, the emission efficiency value of the reference phosphor (compound 1, obtained without any addition of sulphur, selenium or tellurium) has been normalized to 1.0 in both the cases of 633 and 800 nm stimulation. This does not mean that the emission efficiency value of such phosphor when stimulated at 633 nm is equal to the emission efficiency value of the same phosphor when stimulated at 800 nm. The two values have been normalized to 1.0 in order to be more easily compared with the emission efficiency values of the compounds of the present invention (compounds 2-18 of Table 1).

The data of Table 1 show that phosphors of the present invention obtained with the addition of sulphur, selenium or tellurium to the divalent europium activated barium fluorochloride matrix exhibit an remarkably improved photostimulated light emission in comparison with the reference phosphor (compound 1) having a barium fluorochloride matrix without any addition of sulphur, selenium or tellurium, when stimulated at 633 nm by a He-Ne laser beam.

In particular, the compounds 5-12, obtained by adding Na$_2$S, Na$_2$Se and Na$_2$SeO$_3$ to the barium fluorochloride matrix, and the compounds 16-18, obtained by adding S, Se or Te, have given the most relevant results. It is worth being noted that the simple addition of S, Se or Te to the barium fluorochloride matrix has given a remarkable improvement: this fact confirms that the addition of such elements in the barium fluorochloride matrix is determining for the formation of an increased number of F-centres such as anionic vacancies.

A much more remarkable improvement in the photostimulated light emission is noted when the same phosphors as described above are stimulated at 800 nm. In fact, we can note that the photostimulated light emission efficiency values of the compounds of the present invention (compounds 2-18) with respect to the reference compound value (1) are much higher when they are stimulated at 800 nm rather than 633 nm. Accordingly, while the reference compound shows (a) a relevant emission when stimulated with radiations having wavelength less than 700 nm, but (b) an irrelevant emission when stimulated with radiations having wavelength greater than 700 nm, the phosphors of the present invention exhibit (a) high values of emission efficiency when stimulated in the visible range (less than 700 nm), such values being higher than the value of the reference compound, and (b) still relevant values when stimulated in the infrared range, greater than 700 nm.

The following Table 2 reports the emission efficiency values of the photostimulated light emitted by the phosphors prepared according to Example 3 and processed as described in Examples 4 and 5. In comparison, a $BaFBr:0.0001Eu^{2+}$ phosphor was evaluated under the same conditions.
(1-m) and m, respectively, indicate the molar fraction of BaFBr and of the addition to the BaFBr matrix.

Table 2

| Effect of sulphur addition to $BaFBr:aEu^{2+}$ phosphor (a = 0.0001). | | | | | |
|------|-----------|--------|--------|--------|--------|
| Cmp. | Additions | (1-m) | m | Emission Efficiency | |
| | | | | 633 nm | 800 nm |
| 19. | NONE | 1 | 0 | 1.0 | 1.0 |
| 20. | $Na_2S$ | 0.9937 | 0.0061 | 1.4 | 1.6 |
| 21. | $Na_2S$ | 0.9703 | 0.0295 | 3.0 | 2.0 |
| 22. | $Na_2S$ | 0.9361 | 0.0638 | 2.4 | 3.1 |
| 23. | $Na_2SO_4$ | 0.9966 | 0.0033 | 2.6 | 1.8 |

Table 2 shows the emission efficiency values of the phosphors of the present invention obtained with the addition of sulphur to the barium fluorobromide matrix activated with divalent europium (compounds 20-23) with respect to the reference compound (19) obtained without any addition of sulphur, when stimulated at 633 nm and at 800 nm. As already shown in Table 1, we can note a remarkable improvement of the stimulated light emission of the compounds of the present invention in comparison with the reference phosphor.

## Claims

1.  A method for recording and reproducing a radiation image comprising the steps of (i) causing a visible or infrared radiation-stimulable phosphor to absorb a high energy radiation passing through an object, (ii) stimulating said phosphor with visible or infrared radiations to release the energy stored as fluorescent light, and (iii) detecting said fluorescent light with light detecting means, characterized in that said phosphor is selected from the group of sulphur, selenium or tellurium substituted barium fluorohalides activated with divalent europium.

2.  The method for recording and reproducing a radiation image of claim 1, wherein said phosphor is represented by the formula:

    $(1-m)BaFX.m(M_xA) : aEu^{2+}$,

    wherein X = Cl or Br; M is an element selected from the group of Li,Na,K,Rb,Ba,Sr,Ca and Mg; A is S,Se or Te; 0<m≦0.03; x = 0, 1 or 2 and 0<a≦0.01.

3.  The method for recording and reproducing a radiation image of claim 1, wherein said phosphor is stimulated with a radiation having a wavelength in the range of 480 to 1100 nm.

4.  The method for recording and reproducing a radiation image of claim 3, wherein said phosphor is stimulated with a radiation having a wavelength in the range of 700 to 1100 nm.

5.  An improved apparatus for recording and reproducing a radiation image comprising (1) means for causing a visible or infrared radiation-stimulable phosphor to absorb a high energy radiation passing through an object, (ii) means for stimulating said phosphor with visible or infrared radiations to release the energy stored as fluorescent light, and (iii) means for detecting said fluorescent light, said apparatus being characterized in that said phosphor is selected from the group of sulphur, selenium or tellurium substituted barium fluorohalides activated with divalent europium.

6.  The apparatus for recording and reproducing a radiation image of claim 5, wherein said phosphor is represented by the formula:

$(1\text{-}m)BaFX.m(M_xA) : aEu^{2+}$,

wherein X = Cl or Br; M is an element selected from the group of Li,Na,K,Rb,Ba,Sr,Ca and Mg; A is S,Se or Te; 0<m≦0.03; x = 0, 1 or 2 and 0<a≦0.01.

**7.** The apparatus for recording and reproducing a radiation image of claim 5, wherein said phosphor is stimulated with a radiation having a wavelength in the range of 480 to 1100 nm.

**8.** A radiation image storage panel having a fluorescent layer comprising a binder and a stimulable phosphor dispersed therein characterized in that said phosphor is selected from the group of sulphur, selenium or tellurium substituted barium fluorohalides activated with divalent europium.

**9.** The radiation image storage panel of claim 8 wherein said phosphor is represented by the formula:

$(1\text{-}m)BaFX.m(M_xA) : aEu^{2+}$

wherein X = Cl or Br; M is an element selected from the group of Li,Na,K,Rb,Ba,Sr,Ca and Mg; A is S,Se or Te; 0<m≦0.03; x = 0, 1 or 2 and 0<a≦0.01.

**10.** A photostimulable phosphor selected from the group of sulphur, selenium or tellurium substituted barium fluorohalides activated with divalent europium.

**11.** The photostimulable phosphor of claim 10 represented by the formula:

$(1\text{-}m)BaFX.m(M_xA) : aEu^{2+}$

wherein X = Cl or Br; M is an element selected from the group of Li,Na,K,Rb,Ba,Sr,Ca and Mg; A is S,Se or Te; 0<m≦0.03; x = 0, 1 or 2 and 0<a≦0.01.

**Revendications**

**1.** Procédé pour enregistrer et reproduire une image obtenue par rayonnement comprenant les étapes consistant à (i) faire absorber, par un luminophore stimulable par un rayonnement visible ou infrarouge, un rayonnement à haute énergie traversant un objet, (ii) stimuler ledit luminophore avec des radiations visibles ou infrarouges pour libérer l'énergie stockée sous forme de lumière fluorescente et (iii) détecter la lumière fluorescente avec un dispositif photodétecteur caractérisé en ce que ledit luminophore est choisi parmi l'ensemble constitué par les fluorohalogénures de baryum substitués par du soufre, du sélénium ou du tellure et activés avec de l'europium divalent.

**2.** Procédé d'enregistrement et de reproduction d'une image obtenue par rayonnement selon la revendication 1, dans lequel ledit luminophore est représenté par la formule :

$(1\text{-}m)BaFX.m(M_xA) : aEu^{2+}$

dans laquelle X = Cl ou Br ; M est un élément choisi parmi l'ensemble constitué par Li, Na, K, Rb, Ba, Sr, Ca et Mg ; A est S, Se ou Te ; 0 < m ≦ 0,03 ; x = 0, 1 ou 2 ; et 0 < a ≦ 0,01.

**3.** Procédé d'enregistrement et de reproduction d'une image obtenue par rayonnement selon la revendication 1, dans lequel ledit luminophore est stimulé avec un rayonnement ayant une longueur d'onde dans la gamme de 480 à 1 100 nm.

**4.** Procédé d'enregistrement et de reproduction d'une image obtenue par rayonnement selon la revendication 3, dans lequel ledit luminophore est stimulé avec un rayonnement ayant une longueur d'onde dans la gamme de 700 à 1 100 nm.

**5.** Appareil perfectionné pour l'enregistrement et la reproduction d'une image obtenue par rayonnement comprenant (i) un dispositif pour provoquer l'absorption d'un rayonnement à haute énergie traversant un objet par un luminophore stimulable par un rayonnement visible ou infrarouge, (ii) un dispositif pour stimuler ledit luminophore avec des rayonnements visibles ou infrarouges pour libérer l'énergie stockée sous forme de lumière fluorescente, et (iii) un dispositif pour détecter ladite lumière fluorescente, ledit appareil étant caractérisé en ce que ledit luminophore est choisi parmi l'ensemble constitué par les fluorohalogénures de baryum substitués avec du soufre, du sélénium ou du tellure et activés avec de l'europium divalent.

6. Appareil pour l'enregistrement et la reproduction d'une image obtenue par rayonnement selon la revendication 5, dans lequel ledit luminophore est représenté par la formule :

$(1-m)BaFX.m(M_xA) : aEu^{2+}$

dans laquelle X = Cl ou Br, M est un élément choisi parmi l'ensemble constitué par Li, Na, K, Rb, Ba, Sr, Ca et Mg ; A est S, Se ou Te ; $0 < m \leqq 0,03$ ; x = 0, 1 ou 2 ; et $0 < a \leqq 0,01$ .

7. Appareil pour l'enregistrement et la reproduction d'une image obtenue par rayonnement selon la revendication 5, dans lequel ledit luminophore est stimulé avec un rayonnement ayant une longueur d'onde dans la gamme de 480 à 1 100 nm.

8. Panneau de stockage d'une image obtenue par rayonnement ayant une couche fluorescente comprenant un liant dans lequel est dispersé un luminophore stimulable, caractérisé en ce que ledit luminophore est choisi parmi l'ensemble constitué par les fluorohalogénures de baryum substitués avec du soufre, du sélénium ou du tellure et activés avec de l'europium divalent.

9. Panneau de stockage d'une image obtenue par rayonnement selon la revendication 8, dans lequel ledit luminophore est représenté par la formule :

$(1-m)BaFX.m(M_xA) : aEu^{2+}$

dans lequel X = Cl ou Br ; M est un élément choisi parmi l'ensemble constitué par Li, Na, K, Rb, Ba, Sr, Ca et Mg ; A est S, Se ou Te ; $0 < m \leqq 0,03$ ; x = 0, 1 ou 2 ; et $0 < a \leqq 0,01$.

10. Luminophore photostimulable choisi parmi l'ensemble constitué par les fluorohalogénures de baryum substitués avec du soufre, du sélénium ou du tellure et activés avec de l'europium divalent.

11. Luminophore photostimulable selon la revendication 10, représenté par la formule :

$(1-m)BaFX.m(M_xA) : aEu^{2+}$

dans laquelle X = Cl ou Br ; M est un élément choisi parmi l'ensemble constitué par Li, Na, K, Rb, Ba, Sr, Ca et Mg ; A est S, Se ou Te ; $0 < m \leqq 0,03$ ; x = 0, 1 ou 2 ; et $0 < a \leqq 0,01$.

**Patentansprüche**

1. Verfahren zur Aufnahme und Wiedergabe eines Strahlungsbilds, umfassend die Stufen: (1) Bewirken einer Absorption einer durch einen Gegenstand tretender Hochenergiestrahlung mittels eines durch sichtbare oder Infrarotstrahlung anregbaren Leuchtstoff, (2) Anregen des Leuchtstoffs mit sichtbarer oder Infrarotstrahlung, um die gespeicherte Energie als Fluoreszenz freizusetzen und (3) Nachweisen der Fluoreszenz durch Lichtdetektionsvorrichtungen, **dadurch gekennzeichnet,** daß der Leuchtstoff aus der Gruppe von schwefel-, selen- oder tellursubstituierten Bariumfluorhalogeniden, die mit zweiwertigem Europium aktiviert sind, ausgewählt ist.

2. Verfahren zur Aufzeichnung und Wiedergabe eines Strahlungsbilds nach Anspruch 1, wobei der Leuchtstoff durch die Formel

$(1-m)BaFX.m(M_xA) : aEU^{2+}$

dargestellt wird, wobei X Cl oder Br ist, M ein Element ausgewählt aus der Gruppe Li, Na, K, Rb, Ba, Sr, Ca und Mg ist, A S, Se oder Te ist, $0<m\leqq0,03$, x den Wert 0, 1 oder 2 bedeutet und $0<a\leqq0,01$ ist.

**3.** Verfahren zur Aufzeichnung und Wiedergabe eines Strahlungsbilds nach Anspruch 1, wobei der Leuchtstoff durch eine Strahlung mit einer Wellenlänge im Bereich von 480 bis 1100 nm angeregt wird.

**4.** Verfahren zur Aufzeichnung und Wiedergabe eines Strahlungsbilds nach Anspruch 3, wobei der Leuchtstoff durch eine Strahlung mit einer Wellenlänge im Bereich von 700 bis 1100 nm angeregt wird.

**5.** Verbesserte Vorrichtung zur Aufzeichnung und Wiedergabe eines Strahlungsbildes, umfassend: (1) Mittel zum Bewirken einer Adsorption einer durch einen Gegenstand tretender Hochenergiestrahlung mittels eines durch sichtbare oder Infrarotstrahlung anregbaren Leuchtstoff, (2) Mittel zum Anregen des Leuchtstoffes mit sichtbarer oder Infrarotstrahlung, um die als Fluoreszenz gespeicherte Energie freizusetzen und (3) Mittel zum Nachweis der Fluoreszenz, wobei die Vorrichtung **dadurch gekennzeichnet** ist, daß der Leuchtstoff aus der Gruppe von schwefel-, selen- oder tellursubstituierten Bariumfluorhalogeniden, die mit zweiwertigem Europium aktiviert sind, ausgewählt ist.

**6.** Vorrichtung zur Aufzeichnung und Wiedergabe eines Strahlungsbilds nach Anspruch 5, wobei der Leuchtstoff durch die Formel

$$(1-m)BaFX.m(M_xA) : aEU^{2+}$$

dargestellt wird, wobei X Cl oder Br ist, M ein Element ausgewählt aus der Gruppe Li, Na, K, Rb, Ba, Sr, Ca und Mg ist, A S, Se oder Te ist, $0<m\leqq0,03$, x den Wert 0, 1 oder 2 bedeutet und $0<a\leqq0,01$ ist.

**7.** Verfahren zur Aufzeichnung und Wiedergabe eines Strahlungsbildes nach Anspruch 5, wobei der Leuchtstoff durch eine Strahlung mit einer Wellenlänge im Bereich von 480 bis 1100 nm angeregt wird.

**8.** Eine Strahlungsbild-Speicherplatte mit einer fluoreszierenden Schicht, umfassend ein Bindemittel und einen darin dispergierten anregbaren Leuchtstoff, **dadurch gekennzeichnet,** daß der Leuchtstoff aus der Gruppe von schwefel-, selen- oder tellursubstituierten Bariumfluorhalogeniden, die mit zweiwertigem Europium aktiviert sind, ausgewählt ist.

**9.** Strahlungsbild-Speicherplatte nach Anspruch 8, wobei der Leuchtstoff durch die Formel

$$(1-m)BaFX.m(M_xA) : aEU^{2+}$$

dargestellt wird, wobei X Cl oder Br ist, M ein Element ausgewählt aus der Gruppe Li, Na, K, Rb, Ba, Sr, Ca und Mg ist, A S, Se oder Te ist, $0<m\leqq0,03$, x den Wert 0, 1 oder 2 bedeutet und $0<a\leqq0,01$ ist.

**10.** Ein durch Licht anregbarer Leuchtstoff, ausgewählt aus der Gruppe von schwefel-, selen- oder tellursubstituierten Bariumfluorhalogeniden, die mit zweiwertigem Europium aktiviert sind.

**11.** Durch Licht anregbarer Leuchtstoff nach Anspruch 10, dargestellt durch die Formel

$$(1-m)BaFX.m(M_xA) : aEU^{2+},$$

wobei X Cl oder Br ist, M ein Element ausgewählt aus der Gruppe Li, Na, K, Rb, Ba, Sr, Ca und Mg ist, A S, Se oder Te ist, $0<m\leqq0,03$, x den Wert 0, 1 oder 2 bedeutet und $0<a\leqq0,01$ ist.